# EUROPÄISCHE PATENTANMELDUNG

(11) **EP 3 871 844 A1**
(43) Veröffentlichungstag der Anmeldung: **01.09.2021**
(21) Anmeldenummer: 20159701.0
(22) Anmeldetag: 27.02.2020
(51) Int. Cl.: B25J 15/06, B25J 15/04

(54) **VORRICHTUNG ZUM HABHAFTWERDEN UND ABGEBEN EINES GEGENSTANDES**

(71) Anmelder: Siemens Aktiengesellschaft, 80333 München (DE)
(72) Erfinder: ENENKEL, Peter, 78462 Konstanz (DE)
(74) Vertreter: Maier, Daniel Oliver

(57) **Zusammenfassung**

Der vorliegenden Erfindung liegt daher die Aufgabe zugrunde, eine Vorrichtung zum Habhaftwerden und Abgeben eines Gegenstandes, der unter Umständen auch lageinstabil und/oder von einer nicht oberflächensteifen Verpackung umgeben sein kann, anzugeben, die sich durch einen einfachen Aufbau und eine schnelle Prozessgeschwindigkeit auszeichnet und dabei den Gegenstand zuverlässig von einem Ort zu einem anderen Ort bewegen lässt.

Diese Aufgabe wird erfindungsgemäss durch eine Vorrichtung (2) zum Habhaftwerden und Abgeben eines Gegenstandes (4), der unter Umständen auch lageinstabil und/oder von einer nicht oberflächensteifen Verpackung umgeben sein kann, gelöst, umfassend:
a) ein händisch und/oder maschinell gesteuerter Arm (6), der aktiv auf den Gegenstand (4) zuführbar ist,
b) eine an dem frei beweglichen Ende des Arms (6) angeordnete Ansaugöffnung (8) zum Ansaugen des Gegenstandes (4);
c) eine Saugvorrichtung (12) zur Bereitstellung eines an der Ansaugöffnung (8) zum Habhaftwerden des Gegenstandes (4) erforderlichen Unterdrucks; und
d) ein an der Ansaugöffnung (8) angeordnetes steuerbares Unterdruckschaltventil (16) zur Einstellung des von der Saugvorrichtung (12) auf den Gegenstand einwirkenden Unterdrucks.

Auf diese Weise ist es mit dieser Vorrichtung möglich auch von der Oberflächenbeschaffenheit her schwierige Gegenstände, wie zum Beispiel Sortierstücke mit einer inhomogenen Gestalt und/oder einer porösen Oberfläche und/oder in Kunststoffbeutel eingepackte Sortierstücke usw., sicher durch das Ansaugen ergreifen(festhalten) und dann entsprechend weitertransportieren zu können.

## Beschreibung

Die Erfindung betrifft eine Vorrichtung zum Habhaftwerden und Abgeben eines Gegenstandes, der unter Umständen auch lageinstabil und/oder von einer nicht oberflächensteifen Verpackung umgeben sein kann.

Grosse Logistikzentren mit Gepäck-, Post- und/oder Paketsortieranlagen, in welchen Gepäckstücke, Briefe und/oder große Briefe und/oder Pakete verarbeitet werden, werden beispielsweise von der Firma Siemens Logistics GmbH vertrieben.

In derartigen Logistikzentren werden Gepäckstücke, Briefe, Pakete bzw. Sendungen (im Folgenden als Sortierstücke bezeichnet) an einer Vereinzelungsvorrichtung (Stoffeingabe) aus einem Vorrat, z.B. einem Stapel, vereinzelt, von einem Fördersystem entlang eines Förderweges transportiert und an mehreren Sortierausgängen, realisiert zum Beispiel durch Sortierweichen oder Querbandsorter oder Kippvorrichtungen, den jeweiligen Zielstellen, wie z.B. Zielstellen einer Gepäcksortieranlage in einem Flughafen, zugeführt. Während des Transport- oder Sortierprozesses werden die Sortierstücke in die Zielstellen sortiert. Jeder Zielstelle wird für den Sortierprozess mittels einer Sortier-/Transportsteuerung jeweils ein variabler Ziel-Code entsprechend der Sortierlogik bzw. entsprechend dem Sortierprozess zugeordnet. Auch den Sortierstücken wird ein variabler Ziel-Code zugeordnet, welchem entsprechend sie dann in eine Zielstelle sortiert werden. Mehrere Zielstellen können auch den gleichen Ziel-Code haben, beispielsweise bei Zieladressen mit bekannt hohem Sendungsaufkommen. Das bietet sich z. B. an, wenn die Kapazität einer Zielstelle nicht ausreicht, um alle Sortierstücke für diesen Ziel-Code aufzunehmen.

Mit dem starken Aufkommen von Kleingutsendungen, für die in den nächsten Jahren jährliche Zuwachsraten von mehr als 20% prognostiziert werden, steigt zum einen die Anzahl der zu verarbeitenden Sortierstücke massiv an, während zum anderen die sehr häufig nicht homogene Verpackung dieser Kleingutsendungen die Sortierung dieser allgemein als lageinstabil bezeichneten Sortierstücke im Vergleich zu einem herkömmlichen quaderförmigen Paket oder Päckchen wesentlich anspruchsvoller macht. Für diese Kleingutsendungen, die im Wesentlichen aus dem B2C-E-Commerce stammen und extrem heterogene und lageinstabile Verpackungen aufweisen, wird der zukünftige Anteil am gesamten Stückgutaufkommen auf mehr als 50% geschätzt.

Weiter wird im Zuge der Automatisierung der Sortierprozesse eine Vollautomatisierung des Prozesses gemäss dem Schlagwort «One Touch» auf möglichst viele Endstellen angestrebt. Hierzu ist es besonders zentral, dass besonders lageinstabile Sortierstücke an einer Stelle im Sortiervorgang gut ergriffen und an einer anderen Stelle im Sortiervorgang auch wieder abgegeben werden können.

Diese vorstehend genannten Anforderungen zum Handling von Sortierstücken können allgemein aber auch für jede Art von Gegenständen gelten, die von einer Stelle zu einer anderen Stelle bewegt werden müssen, so wie dies beispielsweise auch in industriellen Fertigungs- und Automatisierungssystemen auftreten kann. Der vorstehend näher erläuterte Fall der Sortierstücke stellt damit eigentlich nur eine speziellen Anwendungsfall eines industriellen Automatisierungssystems dar.

Zum Aufgreifen eines Gegenstandes, besonders eines Sortierstücks, existieren derzeit bereits einige Lösungen, die jedoch besonders im Bezug auf lageinstabile Sortierstücke und Sortierstücke mit inhomogener Struktur und/oder verformbarer Verpackung nicht zufriedenstellend sind.

Der vorliegenden Erfindung liegt daher die Aufgabe zugrunde, eine Vorrichtung zum Habhaftwerden und Abgeben eines Gegenstandes, der unter Umständen auch lageinstabil und/oder von einer nicht oberflächensteifen Verpackung umgeben sein kann, anzugeben, die sich durch einen einfachen Aufbau und eine schnelle Prozessgeschwindigkeit auszeichnet und dabei den Gegenstand zuverlässig von einem Ort zu einem anderen Ort bewegen lässt.

Diese Aufgabe wird erfindungsgemäss durch eine Vorrichtung zum Habhaftwerden und Abgeben eines Gegenstandes, der unter Umständen auch lageinstabil und/oder von einer nicht oberflächensteifen Verpackung umgeben sein kann, gelöst, umfassend:
a) ein händisch und/oder maschinell gesteuerter Arm, der aktiv auf den Gegenstand zuführbar ist,
b) eine an dem frei beweglichen Ende des Arms angeordnete Ansaugöffnung zum Ansaugen des Gegenstandes;
c) eine Saugvorrichtung zur Bereitstellung eines an der Ansaugöffnung zum Habhaftwerden des Gegenstandes erforderlichen Unterdrucks; und
d) ein an der Ansaugöffnung angeordnetes steuerbares Unterdruckschaltventil zur Einstellung des von der Saugvorrichtung auf den Gegenstand einwirkenden Unterdrucks.

Auf diese Weise ist es mit dieser Vorrichtung möglich auch von der Oberflächenbeschaffenheit her schwierige Gegenstände, wie zum Beispiel Sortierstücke mit einer inhomogenen Gestalt und/oder einer porösen Oberfläche und/oder in Kunststoffbeutel eingepackte Sortierstücke usw., sicher durch das Ansaugen «ergreifen» zu können. Im Anspruchswortlaut wurde hier ganz allgemein das Wort «Habhaftwerden» verwendet, weil das Ansaugen im reinen Wortsinn eigentlich kein Greifen oder Ergreifen des Gegenstandes ist, grundsätzlich aber natürlich so verstanden werden kann. Es sei zudem angemerkt, dass die englische Sprache mit dem Begriff «get hold of something» eine ebenso gelungene Version für das Habhaftwerden eines Gegenstandes kennt. Durch die Anordnung des Unterdruckventils an der Ansaugöffnung besteht zudem bei ausreichender Annäherung des Arms und damit der Auslassöffnung an den Gegenstand eine so starke räumliche Nähe des Unterdruckventils zu dem anzusaugenden Gegenstand, dass nur ein vergleichsweise geringes Volumen zu evakuieren ist, bevor der Gegenstand an der Ansaugöffnung angedockt ist. Damit kann der Gegenstand sehr schnell an der Ansaugöffnung durch den auf den Gegenstand bzw. dessen Verpackung einwirkenden Unterdruck festgehalten werden, wodurch sich für die Bewegung des Gegenstandes von einer ersten Position zu einer zweiten Position hin sehr kurze Zykluszeiten ergeben können und somit auch vergleichsweise hohe Beschleunigungen des Gegenstandes durchgeführt werden dürfen. Entsprechend kann dann auch die Position des Unterdruckventil adaptiv so verstellt werden, dass nur noch der zum Festhalten des einmal angesaugten Gegenstandes erforderliche Unterdruck auf den Gegenstand einwirkt, sodass auch diese Weise auch druckempfindliche Gegenstände und/oder Umverpackungen sicher und ohne Beschädigung festgehalten werden können. Mit dem Abbau des Unterdrucks beispielsweise durch die entsprechende Einstellung des Unterdruckventils und/oder die Verringerung der Saugleistung kann der an der Ansaugöffnung festgehaltene Gegenstand dann auch wieder frei gegeben und beispielsweise auf einem Sortierförderer oder einer Aufgabevorrichtung oder einem einfachen Förderband oder ähnlichem abgelegt werden.

Um das Ansaugen von Gegenständen mit einer beispielsweise unförmigen beutelartigen Verpackung vorteilhaft erleichtern zu können, kann die Ansaugöffnung gegenstandsseitig als lamellenartig gestalteter Saugnapf ausgestaltet sein. Dieser Saugnapf kann sich somit auch an die Gestalt und/oder die Beschaffenheit der Oberfläche anpassen, was sich positiv auf den mechanischen Formschluss zwischen den sich zusammenziehenden Lamellen und dem Gegenstand auswirkt. Bei tütenartiger Verpackung kann so ein Teil der Verpackung in den einen Faltenbalg bildenden Saugnapf eingesogen werden, wodurch die Lamellen des Faltenbalges auch oberflächenflexible Verpackungen besonders gut «umschlingen» können. Somit können derartig gehaltene Gegenstände auch bei beutelartiger Verpackung relativ grossen Beschleunigungen ausgesetzt werden, was sich somit wieder positiv auf die Prozessdauer auswirkt.

Dabei ist es zweckmässig, wenn in einer weiteren Ausgestaltung der Erfindung die Lamellen des Saugnapfs hinsichtlich ihrer Verformbarkeit auf eine Bandbreite von erwarteten Oberflächeninhomogenitäten des Gegenstandes und/oder auf eine Bandbreite von erwarteten Gewichten des Gegenstands ausgelegt sind.

Damit bei dem Ansaugen des Gegenstandes auch vergleichsweise hohe Leckageluftströme toleriert werden können, kann es in vorteilhafter Weiterbildung der Erfindung vorgesehen sein, dass die Saugvorrichtung hinsichtlich ihrer Saugleistung auf eine Bandbreite von erwarteten Oberflächeninhomogenitäten des Gegenstandes und/oder auf eine Bandbreite des erwarteten Gewichts des Gegenstands ausgelegt ist.

Dabei kann beispielsweise berücksichtigt werden, dass bei verknitterten, faltigen, rissigen, verbogenen und/oder porösen Gegenständen derartige Leckageluftströme auftreten können, die durch eine entsprechende Saugleistung überkompensiert werden müssen. Neben der Bereitstellung der erforderlichen Saugleistung durch die Saugvorrichtung muss auch das Unterdruckventil konstruktiv so gestaltet sein, dass ausreichend hohe Unterdruckluftströme mit einer hohen Dynamik an- und auch wieder zurückgeschaltet werden können.

Weiter kann es vorgehen sein, dass auch die Saugvorrichtung die Saugvorrichtung unmittelbar an der Saugöffnung angeordnet ist und vorzugsweise von dem Arm getragen wird. Damit ergibt sich auch ein nur geringes, zu evakuierendes Volumen zwischen der eigentlichen Saugvorrichtung und dem Unterdruckventil.

In einer weiteren vorteilhaften Ausgestaltung der Erfindung kann der Arm als Roboterarm ausgestaltet sein, dessen Steuerung vorzugsweise mit optischen Erfassungsmitteln zur Steuerung der Bewegung der Saugöffnung auf den Gegenstand zu assoziierbar ist. So kann beispielsweise an der Ansaugöffnung eine Kamera angeordnet sein, die mit einer entsprechenden Bildverarbeitungssoftware den anzusaugenden Gegenstand erkennt und hierdurch in der Lage ist, den Roboterarm automatisch so nah an den Gegenstand zu steuern, dass er in den Einflussbereich des Ansaugluftstrom gerät und so an der Saugöffnung angesaugt und dann auch zwecks seiner Verlagerung gehalten wird.

Vorteilhafte Ausgestaltungen der vorliegenden Erfindung werden nachfolgend detailliert mit Bezug auf die Zeichnung näher erläutert. Dabei zeigt:
- Figur 1: in schematischer Ansicht eine Ansicht eines Roboterarms mit integrierter Ansaugvorrichtung;
- Figur 2: in schematischer Ansicht einen vergrösserten Ausschnitt aus dem Roboterarm gemäss Figur 1; und
- Figur 3: in schematischer Ansicht den vergrösserten Ausschnitt gemäss Figur 2 ohne das Hüllrohr.

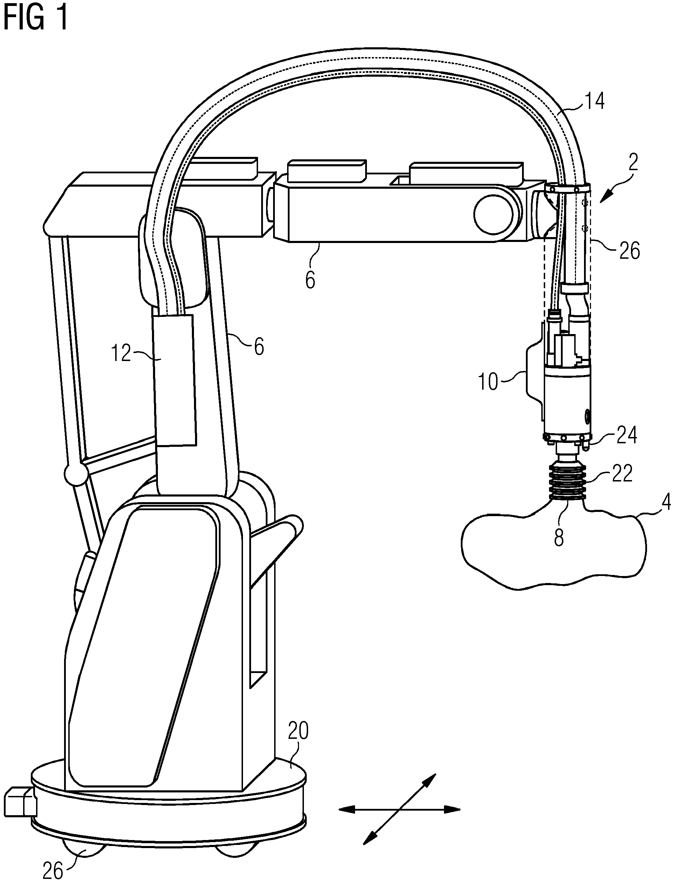

Die vorliegende Erfindung betrifft - wie in Figur 1 gezeigt - eine Vorrichtung 2 zum Habhaftwerden (hier ein Festhalten durch Ansaugen) und Abgeben eines Gegenstandes, hier speziell eines postalischen Sortierstücks 4, das von einer inhomogenen (d.h. nicht-formstabilen) Verpackung umgeben sein kann. Derartige Sortierstücke kommen als sogenannte Kleingutsendungen besonders durch den zunehmenden e-commerce stark auf. Für diese Sendungstypen werden für die nächsten Jahren jährliche Zuwachsraten von mehr als 20% prognostiziert, wodurch zum einen die Anzahl der zu verarbeitenden Sortierstücke massiv anwachsen, während zum anderen die sehr häufig nicht homogene Verpackung dieser Kleingutsendungen die Sortierung dieser allgemein als lageinstabil bezeichneten Sortierstücke im Vergleich zu einem herkömmlichen quaderförmigen Paket oder Päckchen wesentlich anspruchsvoller macht. Dabei besteht im Sortierprozess in der Regel die Anforderung, das Sortierstück an einer ersten Position, wie z.B. auch von einem laufenden Förderband herunterzunehmen, und an einer anderen Stelle, z.B. auch wieder auf ein laufendes Förderband oder einen laufenden Sortierwagen, abzulegen.

Die vorliegende Vorrichtung 2 ist nun genau für die Bearbeitung derartiger hier nachfolgend als schwierig bezeichnete Sortierstücke, die unter Umständen auch lageinstabil und/oder von einer nicht oberflächensteifen Verpackung umgeben sein kann, geeignet. Sie zeichnet sich durch einen einfachen Aufbau und eine schnelle Prozessgeschwindigkeit aus und ermöglicht es dabei die Sortierstücke 4 zuverlässig von einem Ort zu einem anderen Ort zu bewegen.

Hierzu weist die Vorrichtung 2 zum Habhaftwerden und Abgeben des Sortierstücks 4 einen händisch, aber auch maschinell steuerbaren Roboterarm 6 auf, der aktiv auf ein Sortierstück geführt werden kann. Bei einer manuellen Bedienung (freie Verfahrbarkeit des Roboterarm 6 im Raum innerhalb seiner Bewegungsgrenzen) mittels Handgriff 10 kann somit ein hier nicht weiter dargestellter Bediener eine an dem frei beweglichen Ende des Roboterarms 6 angeordnete Ansaugöffnung 8 zum Ansaugen des Sortierstücks 4 auf dieses zubewegen und soweit annähern, dass das Sortierstück 4 in die Ansaugsphäre der Ansaugöffnung 8 gerät und dann an der Saugöffnung 8 angesaugt wird. Dabei kann der Handgriff 10 auch noch Drucksensoren umfassen, die die Steuerung des Roboterarms 6 erkennen lassen, in welche Richtung der Bediener den Roboterarm 6 bewegen möchte. Somit kann der Roboterarm 6 dann so gesteuert werden, dass er diese gewünschte Bewegung ausführt. Dabei wird das gesamte Gewicht des Roboterarms 6 sowie des an der Ansaugöffnung 8 angedockten Sortierstück 4 von einem verfahrbaren Roboterfuss 20 getragen. Für die nachfolgenden Betrachtungen wird aber nun das Ausführungsbeispiels eines automatisch steuerbaren Roboterarms 6 bei automatisch verfahrbarem Roboterfuss 20 mit in jede Richtung antreibbaren Rollen 26 gewählt.

Weiter ist eine an dem Roboterarm 6 angeordnete Saugvorrichtung 12 vorgesehen, die den an der Ansaugöffnung 8 zum Habhaftwerden des Sortierstück 4 erforderlichen Unterdrucks über einen ersten Schlauch 14 bereitstellt. Ausserdem ist direkt an der Ansaugöffnung 8 ein steuerbares Unterdruckschaltventil 16 angeordnet, das zur Einstellung des von der Saugvorrichtung 12 auf das Sortierstück einwirkenden Unterdrucks vorgesehen ist. Zur Steuerung des Unterdruckschaltventils 16 ist ein Druckluftschlauch 18 vorgesehen, mit dem ein hier nicht weiter dargestelltes Pilotventil hinsichtlich seiner Position so gesteuert wird, dass sich der Luftpfad vom ersten Schlauch 14 zum Sortierstück 4 in der Ansaugöffnung 8 hinsichtlich des Luftquerschnitts einstellbar öffnen (beispielsweise durch Abheben einer Ventilkugel von einem Dichtring) und auch wieder verschliessen lässt (beispielsweise durch Absenken der Ventilkugel auf den Dichtring). Dieser Druckluftschlauch 18 wird ebenfalls aus der Saugvorrichtung 12 heraus versorgt und hinsichtlich des Druckes gesteuert.

Um besonders gut unförmige, beutelartige oder sonst wie inhomogene Sortierstücke nach dem Ansaugen sicher an der Ansaugöffnung 8 halten zu können, ist die Ansaugöffnung 8 auf der zu dem Sortierstück 4 gerichteten Seite als lamellenartig gestalteter Saugnapf 22 ausgestaltet. Dabei sind die Lamellen des Saugnapfs 22 hinsichtlich ihrer Verformbarkeit auf eine Bandbreite von erwarteten Oberflächeninhomogenitäten der Sortierstücke und natürlich auch auf die Bandbreite von erwarteten Gewichten der Sortierstücke 4 ausgelegt. Das Ziel dieser Auslegung besteht beispielsweise bei dem Vorsehen von grossen Lamellenbreiten darin, bespielsweise auch für beutelartige Verpackungen beim Zusammenziehen der Lamellen einen Formschluss erzielen zu können, sodass diese Sortierstücke ebenfalls vergleichsweise grossen Beschleunigungen ausgesetzt werden können und somit schnell und effizient zu der gewünschten Ablagestelle bewegt werden können.

Da die Sortierstücke des e-commerce, aber grundsätzlich natürlich auch andere Sortierstücke auch verknitterte, faltige, verbogene oder poröse Oberfläche aufweisen können, werden an die Saugvorrichtung 12 hinsichtlich ihrer Saugleistung gewisse Anforderungen gestellt. Diese muss auf eine Bandbreite von erwarteten Oberflächeninhomogenitäten der Sortierstücke 4 und auf die Bandbreite des erwarteten Gewichts der Sortierstücke ausgelegt ist. Damit muss die Saugvorrichtung 12 in der Lage, auch vergleichsweise grosse Leckageluftströme kompensieren zu können, damit unter dem Strich ein ausreichender Unterdruck erzeugt werden kann um ein derartiges Sortierstück 4 an der Saugöffnung 8 festhalten zu können. Entsprechend sollte dann auch das Unterdruckschaltventil 16 derartige Leckageluftströme zulassen und ebenfalls auch entsprechend schnell geschaltet bzw. eingestellt werden können.

Weiter umfasst das Unterdruckschaltventil 16 auch Sensoren zur Messung des Luftdurchsatzes und meldet diese Signale an die Steuerung der Saugvorrichtung 12. Auf diese Weise kann eine adaptive Steuerung der Saugleistung und/oder der Einstellung des Unterdruckschaltventils 16 vorgenommen werden, sodass auch druckempfindliche Sortierstücke 4 bzw. beutelartige Verpackungen nicht zu stark mit dem Unterdruck beaufschlagt werden.

Zur Steuerung des Roboterarms 6 und damit auch der Saugöffnung 8 auf das nächste anzusaugende und dann festzuhaltende Sortierstück 4 ist im Bereich der Saugöffnung 8 eine kleine Kamera 24 vorgesehen (für einen Stereo-Blick könnte auf der anderen Seite eine zweite Kamera vorgesehen sein, oder auch sonst noch weitere Kameras). Damit kann die Steuerung des Roboterarms 6 die Bewegung der Saugöffnung 8 auf das anzusaugende Sortierstück 4 richten. Nachdem das Sortierstück 4 an der Saugöffnung 8 angedockt ist, kann das Sortierstück an den vorgesehenen Zielort bewegt und dort wieder abgelegt, fallen gelassen, abgeworfen oder sonst wie in den weiteren Sortierprozess übergeben werden. Hierzu kann beispielsweise das vergleichsweise kleine Volumen zwischen Unterdruckschaltventil 16 und dem angesaugten Sortierstück 4, das zum Ansaugen und Festhalten des Sortierstück evakuiert worden ist, wieder mit Luft geflutet werden, sodass nach dem Wegfall des Unterdrucks das Sortierstück 4 wieder der Schwerkraft überlassen wird.

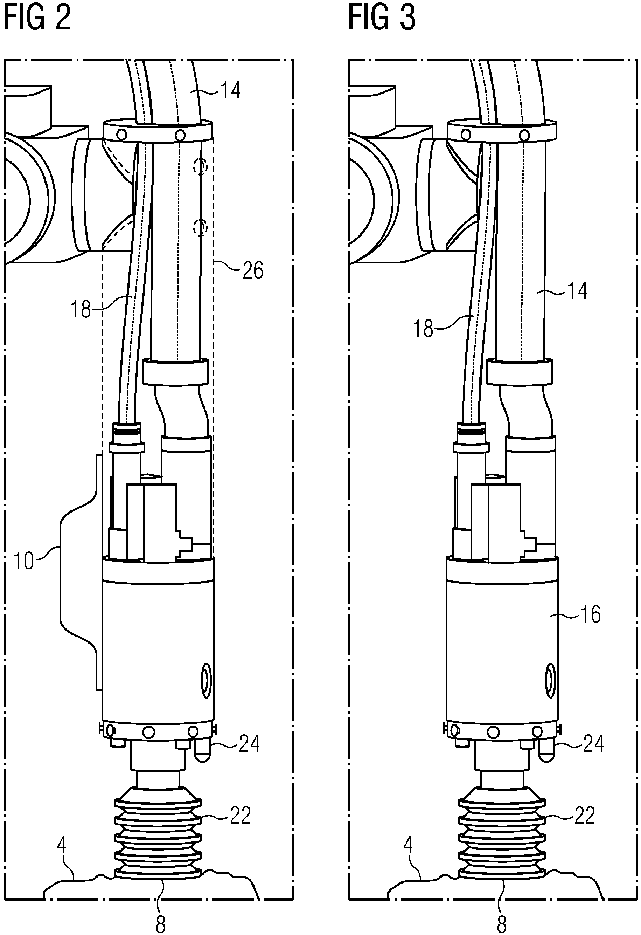

Die Figuren 2 und 3 zeigen den Roboterarm 6 in einem vergrösserten Ausschnitt mit einem daran befestigten Hüllrohr 26 (Fig. 2), in dem das Unterdruckschaltventil 16 angeordnet ist und die beiden Schläuche 14, 18 geführt sind. Figur 3 zeigt diesen Ausschnitt entsprechend vergrössert, aber ohne das Hüllrohr 26.

Die hier vorstehend ausgeführten Ausführungsbeispiele sind natürlich auch auf jede Art von Gegenständen übertragbar, die in der automatischen Fertigung (allgemein in industriellen Prozessen) von einem Ort (z.B. ein Entnahmestapel oder aus einer Entnahmebox) an einen anderen Ort (z.B. Ablage auf einem Fliessband oder Bereitstellung an einem Assembling-Ort) transportiert werden müssen. Der hier offenbarten Vorrichtung wohnt der besondere Vorteil inne, dass schwierige zu ergreifende Gegenstände an der Ansaugöffnung 8 schnell angedockt und sicher gehalten werden und am Zielort wieder schnell abgegeben werden können.

## Patentansprüche

1. Vorrichtung (2) zum Habhaftwerden und Abgeben eines Gegenstandes (4), der unter Umständen auch lageinstabil und/oder von einer nicht oberflächensteifen Verpackung umgeben sein kann, umfassend:
a) ein händisch und/oder maschinell gesteuerter Arm (6), der aktiv auf den Gegenstand (4) zuführbar ist,
b) eine an dem frei beweglichen Ende des Arms (6) angeordnete Ansaugöffnung (8) zum Ansaugen des Gegenstandes (4);
c) eine Saugvorrichtung (12) zur Bereitstellung eines an der Ansaugöffnung (8) zum Habhaftwerden des Gegenstandes (4) erforderlichen Unterdrucks; und
d) ein an der Ansaugöffnung (8) angeordnetes steuerbares Unterdruckschaltventil (16) zur Einstellung des von der Saugvorrichtung (12) auf den Gegenstand einwirkenden Unterdrucks.

2. Vorrichtung (2) nach Anspruch 1,
**dadurch gekennzeichnet, dass**
die Ansaugöffnung (8) gegenstandsseitig als lamellenartig gestalteter Saugnapf (22) ausgestaltet ist.

3. Vorrichtung (2) nach Anspruch 2,
**dadurch gekennzeichnet, dass**
die Lamellen des Saugnapfs (22) hinsichtlich ihrer Verformbarkeit auf eine Bandbreite von erwarteten Oberflächeninhomogenitäten des Gegenstandes (4) und/oder auf eine Bandbreite von erwarteten Gewichten des Gegenstands (4) ausgelegt sind.

4. Vorrichtung (2) nach einem der Ansprüche 1 bis 3,
**dadurch gekennzeichnet, dass**
die Saugvorrichtung (12) hinsichtlich ihrer Saugleistung auf eine Bandbreite von erwarteten Oberflächeninhomogenitäten des Gegenstandes (4) und/oder auf eine Bandbreite des erwarteten Gewichts des Gegenstands (4) ausgelegt ist.

5. Vorrichtung (2) nach einem der Ansprüche 1 bis 4,
**dadurch gekennzeichnet, dass**
die Saugvorrichtung (12) unmittelbar an Saugöffnung (8) angeordnet ist und vorzugsweise von dem Arm (6) getragen wird.

6. Vorrichtung (2) nach einem der Ansprüche 1 bis 5,
**dadurch gekennzeichnet, dass**
der Arm als Roboterarm (6) ausgestaltet ist, dessen Steuerung vorzugsweise mit optischen Erfassungsmitteln (24) zur Steuerung der Bewegung der Saugöffnung (8) auf den Gegenstand (4) zu und ggfs. zum weiteren Transport des Gegenstandes (4) assoziierbar ist.
